Europäisches Patentamt

European Patent Office

Office européen des brevets

(11) Publication number: **0 411 522 A2**

# EUROPEAN PATENT APPLICATION

(21) Application number: **90114559.9**

(22) Date of filing: **30.07.90**

(51) Int. Cl.⁵: **G09B 7/06**

(30) Priority: **04.08.89 IL 91210**

(43) Date of publication of application:
**06.02.91 Bulletin 91/06**

(84) Designated Contracting States:
**DE FR GB**

(71) Applicant: **ORDA INDUSTRIES LTD.**
**Kibbutz Malkia**
**D.N. Merom Hagalil 13845(IL)**

Applicant: **ELECSYS LTD.**
**23 Ephal Street, Industrial Zone, Kiryat Arie**
**49511 Petach Tikva(IL)**

(72) Inventor: **Tamim, Danni**
**Kibbutz Malkia**
**13845(IL)**
Inventor: **Katz, Ezra**
**Kibbutz Malkia**
**13845(IL)**
Inventor: **Avrahami, Zohar**
**40 Benjamin Street**
**Rehovoth(IL)**
Inventor: **Larom, Dov**
**13 Yahadut-Hadmama Street**
**Herzlia(IL)**

(74) Representative: **Modiano, Guido et al**
**MODIANO, JOSIF, PISANTY & STAUB**
**Modiano & Associati Baaderstrasse 3e 3e 3**
**D-8000 München 5(DE)**

(54) **Educational or amusement device.**

(57) A device useful for educational or amusement purposes, includes sheets carrying printed visual data of a plurality of depictions and first machine readable code markings identifying the respective depiction, and sheets carrying printed visual data specifying associative relationships between the depictions and further machine-readable code markings identifying the depictions of the data on the first sheets having a specified associative relationship. A manipulatable reader is used for reading the two code markings into a data processor which processes the data read by the manipulation of the reader and provides an indication of the correct matching of the depictions identified by the first code markings with the associative relationships specified by the second code markings.

FIG 1

Xerox Copy Centre

# EDUCATIONAL OR AMUSEMENT DEVICE

The present invention relates to educational or amusement devices, and particularly to devices including a reader manipulatable by the user to indicate certain selections made by the user and to provide an instant indication of whether the selections made by the user are correct.

One known educational or amusement device of this type includes printed visual data depicting questions to be answered by the user, with each question followed by a plurality of possible answers, and with each possible answer including machine-readable code markings indicating whether or not the answer is correct for the respective question. The user reads the question and selects the answer considered to be correct by passing the reader over the code markings for the respective answer. Thus, the correct answer or answers, being in machine-readable code form, are not recognizable by the user; however, the reader, when reading the code markings of the selected answer or answers recognizes the correct one or ones and provides a visual and/or audible indication as to whether the selected answer is correct or not. Such a known type of device has a limited capacity since it can be operated only in the single multiple-choice mode described above. It therefore requires a separate set of answers and code markings for each question presented to the user.

An object of the present invention is to provide an educational or amusement device of the foregoing type but having a much larger capacity as to the types of questions, answers, or other operations capable of being performed by the device.

According to the present invention, there is provided a device useful for educational or amusement purposes, comprising: first data bearing means including first printed visual data of a plurality of depictions and first machine readable code markings identifying the respective depiction; second data bearing means including second printed visual data specifying associative relationships between said depictions and second machine-readable code markings identifying the depictions of said first printed visual data having a specified associative relationships; a manipulatable reader for reading said first and second code markings on said first and second data bearing means; and a data processor including means for processing the data read by the manipulation of said reader and for providing an indication of the correct matching of the depictions identified by said first code markings with the associative relationships specified by second code markings as read by said reader.

An educational or amusement device constructed in accordance with the foregoing features has a capacity for use with a large variety of different printed visual data and types of questions and/or instructions that may be put to the user. Thus, the described device permits a large number of different algorithms, each representing an associative relationship or game mode to be performed, to be stored in the electronic processor, while the code markings provided on the printed visual data store the data applicable to the printed visual data or to the selected associative relationship or game mode. Such a construction enables the hardware, e.g., the processor, to be substantially standardized, and the code markings printed with the visual data to be used for increasing the versatility of the device for use with many different types of questions and answers or other operations to be elicited from the user.

The invention is herein described, by way of example only, with reference to the accompanying drawings, wherein:

Fig. 1 illustrates the main components of one form of device constructed in accordance with the invention particularly useful for amusement or educational purposes;

Fig. 2 illustrates one form of first printed visual data useful in the device of Fig. 1, this data being a plurality of depictions each including code markings identifying the respective depiction;

Fig. 3 illustrates one form of second printed visual data useful in the device of Fig. 1, this data specifying associative relationships between the depictions in the data of Fig. 2, each associative relationship including second code markings identifying the depictions of the Fig. 2 printed visual data having the specified associative relationships;

Fig. 4 illustrates one form of third printed visual data including third code markings identifying a plurality of game modes readable by the code reader in a game of Fig. 1;

Fig. 5 illustrates one form of fourth visual printed data in the game device of Fig. 1, including fourth code markings identifying a plurality of game operations;

Figs. 6a-6c illustrate other depictions which may be included in the first printed visual data, instead of the pictures illustrated in Fig. 2;

Fig. 7 is a block diagram illustating the reader in the device of Fig. 1; and

Figs. 8-11 illustrate examples of algorithms that may be used for controlling the overall operation of the reader.

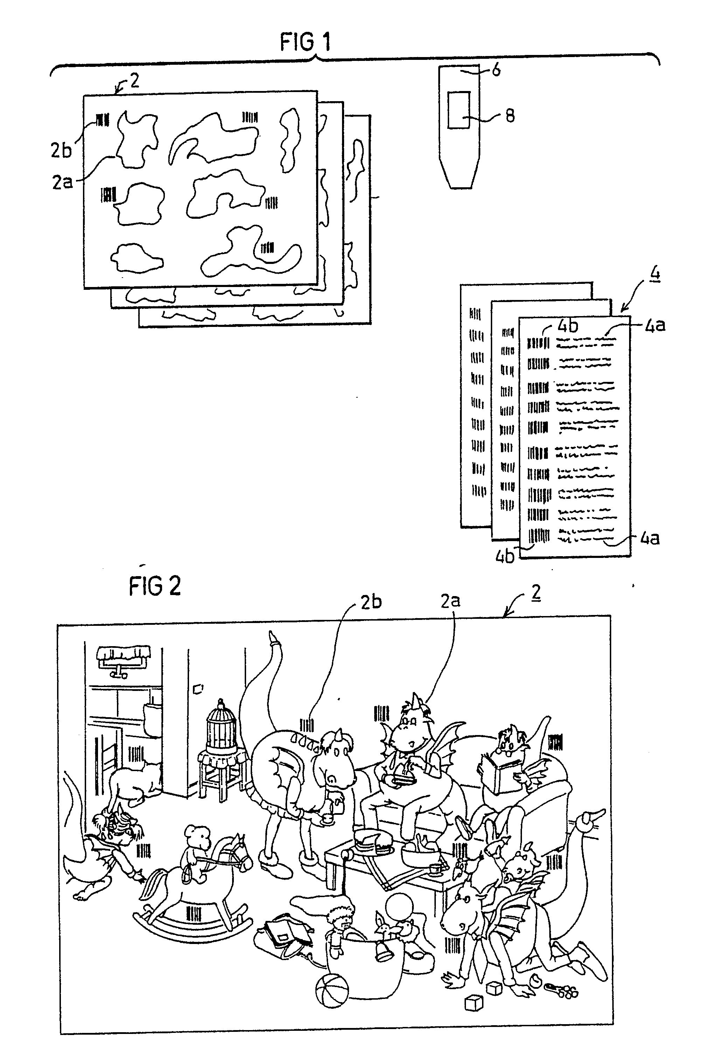

With reference to Fig. 1, there is illustrated the basic elements of one form of educational or amusement device constructed in accordance with the present invention. The basic elements include first data bearing means in the form of a plurality of sheets, generally designated 2, containing first printed visual data of a plurality of depictions each including first code markings identifying the respective depiction; second data bearing means in the form of a second plurality of sheets, generally designated 4, containing second printed visual data specifying associative relationships between the depictions of sheets 2, each associative relationship including second code markings identifying the depictions on sheets 2 having the specified associative relationships; and a wand reader, generally designated 6, for reading the code markings on sheets 2 and 4.

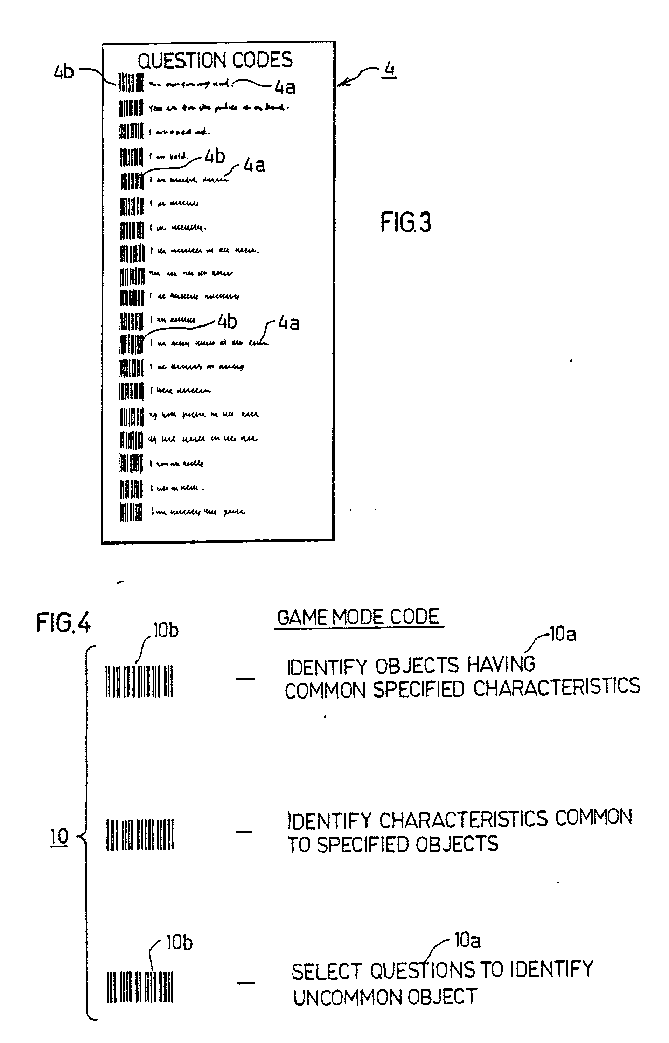

Fig. 2 illustrates one example of the depictions included on sheets 2, wherein it will be seen that such depictions are in the form of pictures 2a, each identified by code markings 2b. Fig. 3 illustrates one of the sheets 4, wherein it will be seen that each sheet contains a plurality of associative relationships 4a with respect to the pictures 2a on sheet 2, with each associative relationship including code markings 4b identifying the pictures 2a on sheet 2 having the depicted associative relationships.

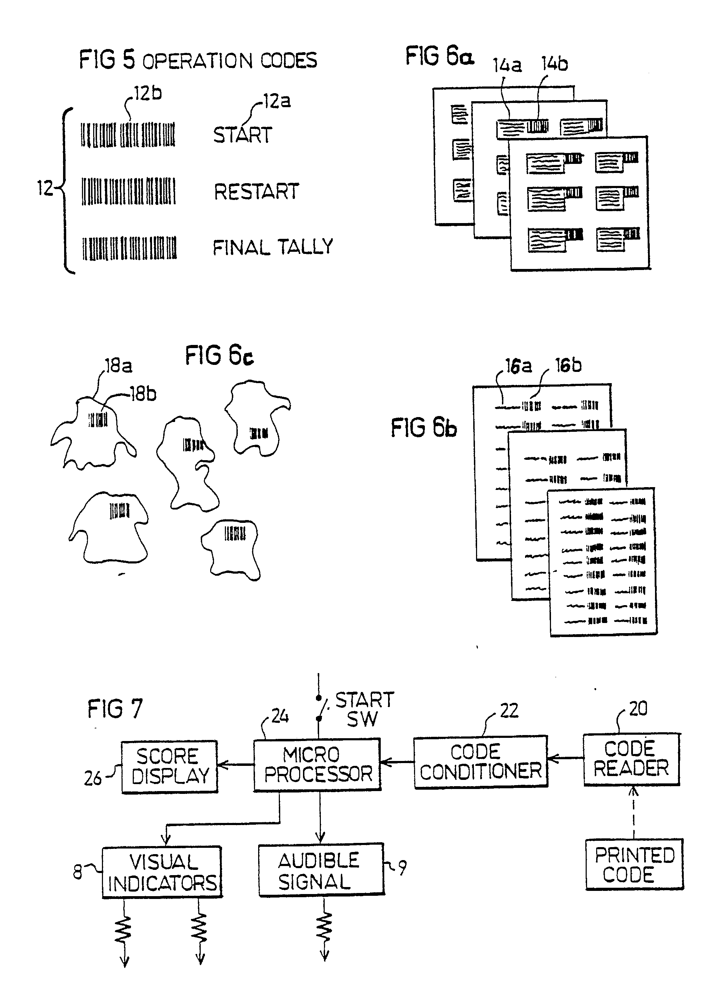

The wand reader 6 is manipulatable by the user, first to read the code markings 4b for a selected associative relationship 4a on one of the sheets 4, and then to read the code markings 2b of the depiction (picture) selected by the user in response to the selected associative relationship 4a. The wand reader 6 includes a data processor which processes the data read by the manipulation of the reader, first in reading code markings 4b for the respective associative relationship on sheet 4, and then the code markings 2b on the respective depiction (picture) selected by the user in response to the selected associative relationship, and provides an indication of whether the depictions identified by the selected code markings 2b correctly match with the code markings 4b for the selected associative relationship. Whether or not the matching is correct is indicated by a visual indicator 8 and/or by an audible signal 9 (Fig. 7) in the wand reader.

For example, the first associative relationship 4a in the question sheet 4 says "You can see my tail". The identification of all the pictures depicted in Fig. 2 in which the tail can be seen would be included in the code markings 4b for the respective question. Accordingly, the user would first visually read the question, then read the code 4b by the use of the wand reader, and finally select the various pictures depicted in the sheet illustrated in Fig. 2 by passing the wand over the code marking 2b for the selected picture 2a. If the selected picture was a correct response to the question 4a, the identification of the respective picture would have been included in the code markings 4b next to that question, so that there would be a correct match between the code marking 2b of the selected picture with one of the code markings 4b included in the respective question.

On the other hand, if a picture was selected which was not a correct response to the respective associative relationship (i.e., a picture was selected in which the tail could not be seen), the identification of the incorrectly selected picture would not match one of the identifications included in the code markings 4b for the respective associative relationship, and therefore this response would not be correct. Whether or not the selected response was a correct one to the respective associative relationship would be indicated by the visual indicator 8 of the wand reader 6, and/or by the audible signal 9 produced by the wand reader.

Fig. 4 illustrates one form of third data bearing means including third printed visual data, generally designated 10, identifying a plurality of game modes, each designated 10a, each game mode including code markings 10b identifying the respective game. Three such game modes are illustrated for purposes of example, namely: (1) identify objects having common specified characteristics; (2) identify characteristics common to specified objects; and (3) select questions to identify an unknown object. An example of game (1) was described above with respect to Figs. 2 and 3. An example of game (2) would be one in which each associative relationship set forth in sheet 4 is one in which objects are specified, or freely selectable by the user, and the user is asked to identify characteristics common to such objects. An example of game (3) would be one in which an unknown object depicted in sheet 2 (Fig. 2) is selected by a random generator included in the data processor of the wand reader 6, and the user is required to select the questions, each answerable by a "yes" or "no", to identify the unknown object, similar to the well-known game "Twenty Questions". The final step is to identify the unknown object from one of a plurality of objects.

It will be appreciated that the operating algorithms for each game would be stored in the data processor of the wand reader 6 and would be selected by reading the code markings 10b for the selected game 10a. The game data, both the visual printed game name and its respective code markings, is preferably included on one of the sheets 4 or 2. In the illustrated embodiment, this data is printed on the associative relation sheet 4 shown in Fig. 3.

The printed visual data may also include operation codes, as illustrated in Fig. 5 and therein generally designated 12. Thus, various operations could be printed visually on one of the sheets 2 or 4, preferably sheet 2, or on a separate sheet, and the respective operation performed by reading the code markings 12b for the selected operation. Fig. 5 illustrates, for purposes of example, the operations "Start", "Reset" and "Final Tally", but it will be appreciated that other operations could be included.

Figs. 6a-6c illustrate various depictions that could be included on the sheets 2 other than the picture depictions illustrated in Fig. 2. Thus, Fig. 6a illustrates textual depictions 14a, Fig. 6b illustrates word depictions 16a, and Fig. 6c illustrates three-dimensional object depictions 18a. Each of these depictions 14a, 16a, 18a illustrated in Figs. 6a-6c would include code markings 14b, 16b and 18b, respectively identifying the respective depiction.

For example, the word depictions 14a in Fig. 6a may be words (includes numbers) to be associated according to the associative relationships set forth on sheets 4 of Fig. 3; the textual description depictions 16a in Fig. 6b may be short descriptions of some object or event having an associative significance and to be associated according to the relationship of sheet 4 in Fig. 3; and the three-dimensional object depictions 18a in Fig. 6c may be various objects having the configurations of animals, geometrical blocks, or the like, also to be associated according to the relationships set forth in sheet 4 illustrated in Fig. 3.

When the depictions are included in a plurality of sheets 2, some or all of the sheets may be transparencies, requiring the user to place one on top of another in a predetermined order, and/or according to a predetermined relationship, as specified in the associative relationships appearing in one of the sheets 4 illustrated in Fig. 3. In addition, the code markings in the depictions illustrated by sheet 2 may identify not only the respective depiction, but also a next succeeding depiction to follow that one in a predetermined associative relationship.

All the code markings (2b, 4b, etc.) are preferably in the form of bar codes which are optically readable by the wand reader 6. The reader 6 includes a light source which illuminates the code, and a light detector which senses the reflected light from the code to generate an electrical signal corresponding to the code read. This electrical signal is processed by the processor within the wand reader 6 to provide an indication of whether a proper response was made to the respective task, e.g., a question or instruction put to the user.

Fig. 7 illustrates the hardware in the wand reader 6 of Fig. 1. Thus, the wand reader 6 includes code reader circuitry 20, preferably of the above-mentioned electro-optical type, which generates an electrical signal according to the printed code read by the reader. The reader 6 further includes code conditioner circuitry 22 which amplifies the signals read by the reader, filters them to reject d.c. components and high frequency noise, discriminates the binary information represented by the code, and generates binary signals which are fed to a microprocessor 24.

Wand reader 6 further includes the previously-mentioned visual indicator 8, audible signal 9, and a score display 26. These units are controlled by the microprocessor 24 according to the data read by the code reader circuitry 20.

As indicated earlier, the microprocessor 24 stores a plurality of algorithms according to the various tasks or games to be performed. The data for any specific task is stored not in the algorithm, but rather in the code markings associated with the printed visual data. Accordingly, the algorithms are not data dependent, and therefore enable new games, tasks and responses to be created without changing or modifying the program stored in the microprocessor.

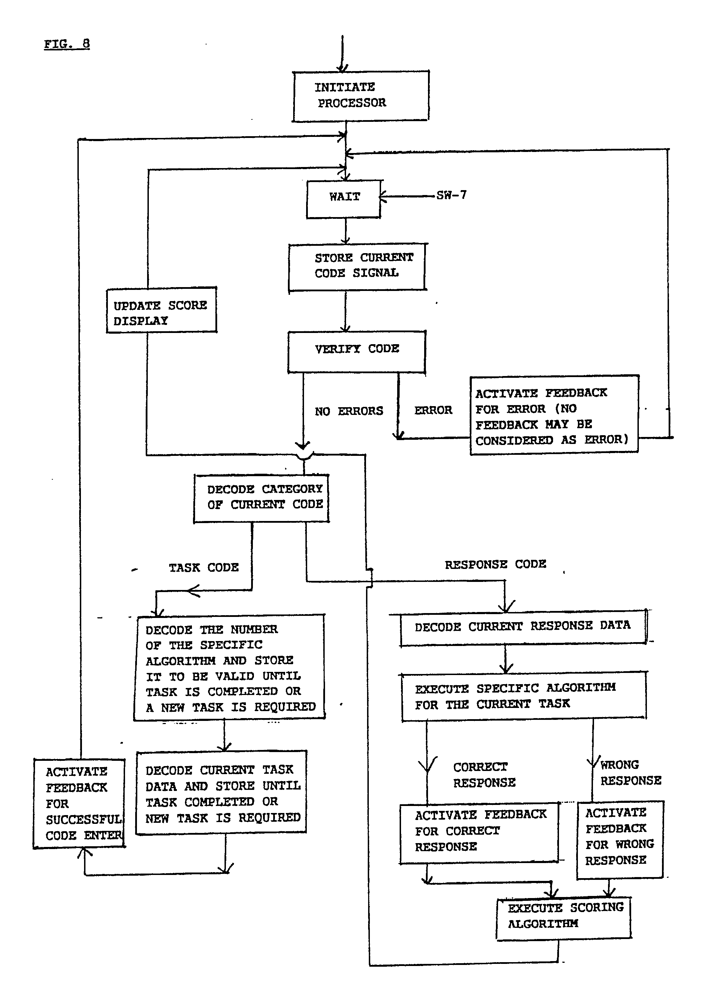

When a specific task or game is to be executed, the appropriate algorithm stored in the microprocessor is selected. Figs. 8-11 illustrate examples of algorithms that may be used.

Fig. 8 is a flow chart illustrating one example of an algorithm stored in the microprocessor 24 or controlling its operation.

When operating according to this algorithm, the microprocessor 24 performs a number of functions, including the following: (1) upon sensing the "start" operation (e.g., code 12b, Fig. 5), it activates the reader circuitry 20 and the code conditioner circuitry 22; (2) stores the binary signals from the code conditioner circuitry 22; and (3) executes a code verification algorithm in order to verify whether the current read code has been read without error. In case no error is detected, an audible valid signal is activated, so that the user should hear the audible signal in order to proceed to the next step.

Processor 24 also decodes the current code and extracts the following information: (a) category of code, i.e., whether the read code is a task code or a response code; (b) if a task code, the number of the stored algorithm to be executed during the current task; and (c) the particular data corresponding to the current code.

Processor 24 further executes the specific algorithm according to the current task for the decoded data of the current code. Completion of the execution of the alogorithm when a response code is read will determine whether the response was correct or incorrect regarding the respective task.

Processor 24 then activates the audible signal 8 and/or visual indicator 9, and also the score display 26, according to the results of the execution in the preceeding step, i.e., whether the response was correct or incorrect with respect to the respective task.

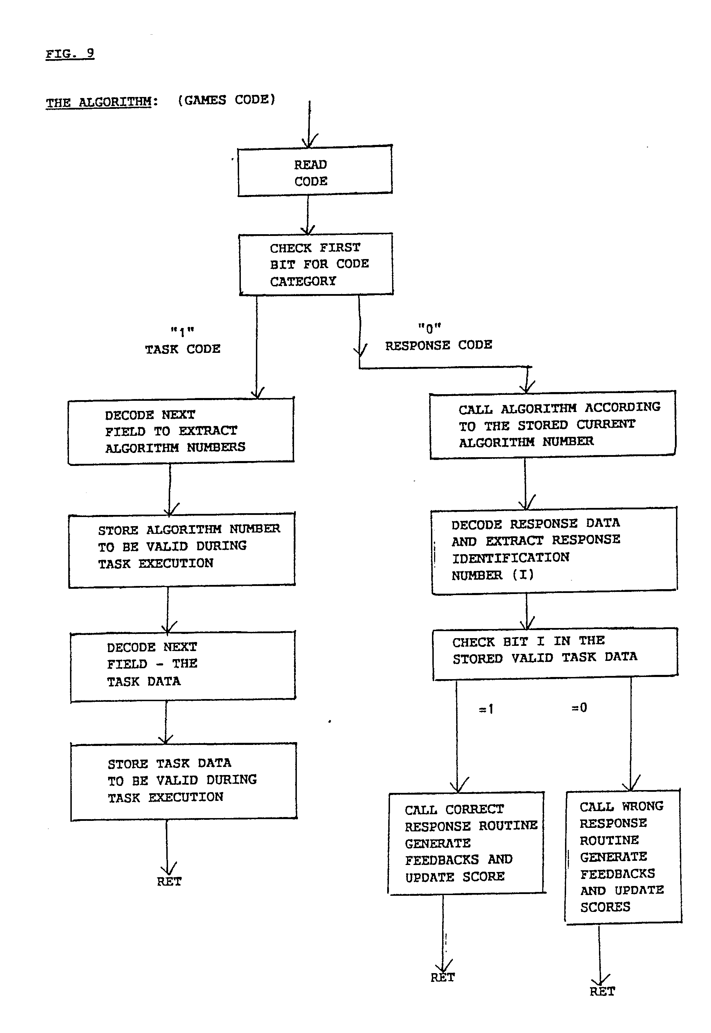

The algorithm illustrated in Fig. 9 reads the code and then checks the first bit for the code category. Thus, a "1" in the first bit indicates a task code, e.g., either a game mode code 10 (Fig. 4), an operation code 12 (Fig. 5), or an associative relationship code 4 specifying one of the questions or instructions on sheet 4 illustrated in Fig. 3. A "0" in the first bit indicates a response code, i.e., a code identifying one of the depiction in sheet 2 illustrated in Fig. 2.

If the code being read is a task code, the computer decodes the next field to extract the algorithm number, stores the algorithm number to be valid during the task execution, decodes the next field to extract the task data (i.e., the correct responses to the specific task), and stores the task data to be valid during the task execution.

On the other hand, if the code being read was found to be a response code, the processor extracts the appropriate algorithm according to the stored algorithm number, decodes the response data, extracts the response identification number (I), and checks the bit (I) in the stored valid task data. If that bit is a "1", indicating a correct response, the processor calls the correct response routine which indicates that the response is correct by the audible signal 9 (Fig. 7), and/or the visual indicator 8, and updates the score display 26. On the other hand, if the bit I is "0", indicating an incorrect response, the processor calls the incorrect response routine which controls the audible signal 9, visual indicator 8 and score display 26, accordingly.

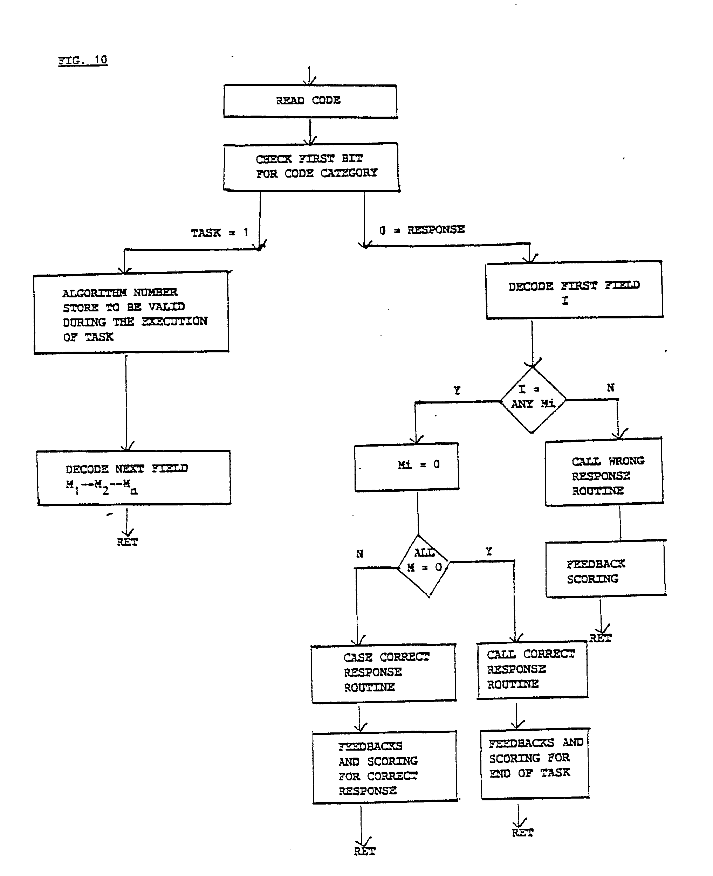

Fig. 10 illustrates an algorithm for selecting N responses out of a population of "m" possible responses where the order of selection is not important. In this case, the current task code is decoded to extract the following information: (a) the algorithm number which indicates which algorithm is to be executed out of the selection algorithm set; and (b) data containing the identification numbers of the correct responses to be selected during the exercise of this particular task.

After reading the task code, the user responds by reading certain response codes out of the population of possible response codes. The response code is decoded and its identification number is extracted. The response identification number is then compared with the task code data to establish whether or not the response is correct.

The task and response codes are limited in respect to the number of available bits. For optimum utilization of the limited code length, the following coding schemes may be used:

(a) Coding by bit mapping:

In the case of a task code, the first field (leftmost bit) indicates whether it is a task code ("1") or a response code ("0"); the second field (e.g., three bits) indicates the respective algorithm number; and the third field ("m" bits) includes the data identifying the correct responses to the respective task, a bit being assigned to each response.

Where the code is a response code, the first field (leftmost bit) is "0" to indicate this fact; and the next field is the binary representation of the response identification number for the respective depiction, which corresponds to the position of the assigned bit.

The user thus chooses a task (say for example a question out of a set of a number of possible questions) by reading the appropriate code. The responses consist of a set of possible answers to the selected question where usually only part of the responses are correct for a given question.

(b) Coding by binary fields:

In this form of coding, the task code includes the identification number of all the correct responses represented in binary code form. Thus, a "1" in the leftmost bit indicates the code is a task code; the next field identifies the algorithm number of the task code; and the next field identifies the correct responses to the particular task selected, which response data is compared with the responses read as a result of the selection of the depictions for the respective task. A correct match indicates a correct reponse, whereas in incorrect match indicates an incorrect response.

The limitation in this coding form is the number of correct responses per task. For example, if the available task data length is 12 bits, then by utilizing a field of 4 bits per response identification number, the size of possible response sets is 16, and the maximum number of correct responses per task is 3. If a larger size of possible response sets is required, e.g., 64, then fields of 6 bits each would be defined, and the maximum correct response per task would be 2.

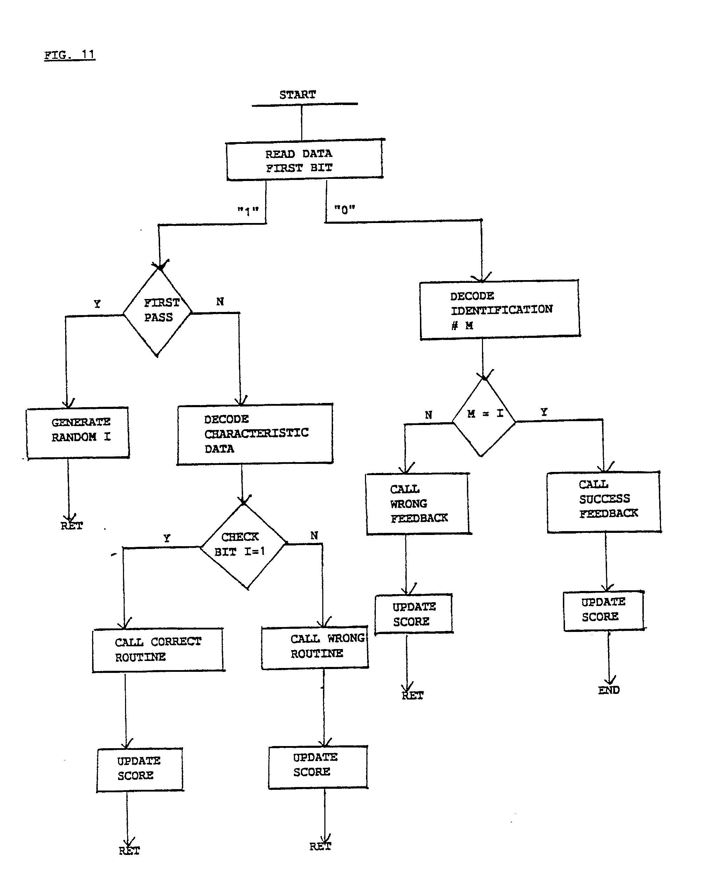

Fig. 11 illustrates an algorithm for discovering the unknown. As mentioned earlier, this could be one of the algorithms stored in the processor and selected when selecting a game mode, e.g., game mode 10c in Fig. 4.

In this algorithm, the task is to find the response selected randomly by the instrument out of a set of possible responses.

In order to find the hidden response, the user can select information about the hidden response by using the instrument to read the characteristics of the hidden response. If the specific characteristic read applies to the hidden response, then a "correct" feedback is generated; otherwise, a "wrong" feedback is generated.

When the user finally arrives at the point where he wishes to attempt to name the hidden response, he again selects it via the instrument. If successful, a "correct" feedback is generated, but if unsuccessful, a "wrong" feedback is generated. In the latter case, the user can then proceed to select further information concerning the hidden response and make a subsequent attempt to identify it.

For each selection of a characteristic feature of the hidden response, the score is decreased, and for an unsuccessful attempt to name the response, a further decrease, preferably a larger decrease, takes place in the score.

With reference to the algorithm illustrated in Fig. 11, the reader first determines whether the code read is a task code ("1") or a response code ("0"). If the code is found to be a task code, the processor selects the appropriate algorithm (e.g., algorithm 4) and generates a random response identification number (e.g., "I").

The user then starts to read characteristics. The characteristic code is checked to determine whether it belongs to the randomly-seelected reponse. If yes, the "correct" routine is called and the score is updated; but if incorrect, the "wrong" routine is called and the score is appropriately updated.

When the user wishes to attempt a response selection, he reads the response code via the instrument. The identification number is then compared with the randomly-generated number (M = I). If equal, the selection is successful, and an appropriate feedback is generated; if not successful, a "wrong" feedback is generated, and the user may then proceed to identify further characteristics and to make another attempt to name the hidden response.

It will be appreciated that the above-described algorithms are but examples of different algorithms that may be stored in the processor of the wand reader and selected according to the data read by the reader. The algorithms of a large number of games and operations may therefore be stored in the processor and selected by the printed data read by the wand reader, thereby enabling the device to have an exceptionally high capacity of different games and tasks capable of being performed by it.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A device useful for educational or amusement purposes, comprising:
first data bearing means including first printed visual data of a plurality of depictions and first machine readable code markings identifying the respective depiction;
second data bearing means including second printed visual data specifying associative relationships between said depictions and second machine-readable code markings identifying the depictions of said first printed visual data having a specified associative relationships;
a manipulatable reader for reading said first and second code markings on said first and second data bearing means;
and a data processor including means for processing the data read by the manipulation of said reader and for providing an indication of the correct matching of the depictions identified by said first code markings with the associative relationships specified by second code markings as read by said reader.

2. The device according to Claim 1, wherein said first data bearing means include a plurality of separate sheets, each sheet containing a plurality of different depictions, with each sheet including first code markings identifying the respective depiction.

3. The device according to Claim 2, wherein at least some of said sheets are transparencies.

4. The device according to any one of Claims 1-3, wherein said second data bearing means include a plurality of sheets, each sheet containing a plurality of different associative relationships, with each associative relationship including second code markings identifying the respective associative relationship.

5. The device according to any one of Claims 1-4, wherein said first code markings of at least some of said depictions of the first printed visual data also identify a next succeeding depiction to follow that depiction in a predetermined associative relationship.

6. The device according to any one of Claims 1-5, wherein said data processor includes storage means for storing a plurality of algorithms each selectable by at least one of said code markings.

7. The device according to Claim 6, wherein said data processor further includes a random generator actuated by at least one of said second code markings included in the second printed visual data for randomly selecting one of said depictions of the first printed visual data.

8. The device according to any one of Claims 1-7, further comprising third printed visual data including third code markings identifying a plurality of game modes and readable by said code reader, said data processor including means for processing the data read by the manipulations of said reader in accordance with the game mode read by said reader.

9. The device according to any one of Claims 1-8, further including fourth printed visual data including fourth code markings identifying a plurality of game operations and readable by said reader for controlling the data processor in accordance with the operations read by said reader.

10. The device according to any one of Claims 1-9, wherein all said code markings are bar codes, and said code reader is a hand-held wand-type reader.

## FIG 1

## FIG 2

QUESTION CODES

4

FIG.3

FIG.4

GAME MODE CODE

10b    10a

IDENTIFY OBJECTS HAVING
COMMON SPECIFIED CHARACTERISTICS

10

IDENTIFY CHARACTERISTICS COMMON
TO SPECIFIED OBJECTS

10b    10a

SELECT QUESTIONS TO IDENTIFY
UNCOMMON OBJECT

## FIG 5 OPERATION CODES

12b

12 {
START
RESTART
FINAL TALLY
}

12a

## FIG 6a

14a  14b

## FIG 6c

18a
18b

## FIG 6b

16a  16b

## FIG 7

START SW

24 MICRO PROCESSOR

26 SCORE DISPLAY

22 CODE CONDITIONER

20 CODE READER

8 VISUAL INDICATORS

9 AUDIBLE SIGNAL

PRINTED CODE

**FIG. 8**

```
                          INITIATE
                          PROCESSOR

                          WAIT  ←———— SW-7

                          STORE CURRENT
                          CODE SIGNAL

   UPDATE SCORE
   DISPLAY
                          VERIFY CODE
                                                    ACTIVATE FEEDBACK
                                                    FOR ERROR (NO
                    NO ERRORS      ERROR             FEEDBACK MAY BE
                                                    CONSIDERED AS ERROR)

                    DECODE CATEGORY
                    OF CURRENT CODE

         TASK CODE                          RESPONSE CODE

                                            DECODE CURRENT RESPONSE DATA

              DECODE THE NUMBER
              OF THE SPECIFIC
              ALGORITHM AND STORE           EXECUTE SPECIFIC ALGORITHM
              IT TO BE VALID UNTIL          FOR THE CURRENT TASK
              TASK IS COMPLETED OR
              A NEW TASK IS REQUIRED

                                            CORRECT           WRONG
                                            RESPONSE          RESPONSE

   ACTIVATE    DECODE CURRENT TASK
   FEEDBACK    DATA AND STORE UNTIL         ACTIVATE FEEDBACK   ACTIVATE
   FOR         TASK COMPLETED OR            FOR CORRECT         FEEDBACK
   SUCCESSFUL  NEW TASK IS REQUIRED         RESPONSE            FOR WRONG
   CODE ENTER                                                  RESPONSE

                                                    EXECUTE SCORING
                                                    ALGORITHM
```

FIG. 9

THE ALGORITHM: (GAMES CODE)

```
                    ┌──────────────┐
                    │   READ       │
                    │   CODE       │
                    └──────────────┘
                           │
                           ▼
                    ┌──────────────┐
                    │ CHECK FIRST  │
                    │ BIT FOR CODE │
                    │ CATEGORY     │
                    └──────────────┘
                     │            │
        "1"          │            │     "0"
     TASK CODE       │            │  RESPONSE CODE
                     │            │
                     ▼            ▼
```

| "1" TASK CODE | "0" RESPONSE CODE |
|---|---|
| DECODE NEXT FIELD TO EXTRACT ALGORITHM NUMBERS | CALL ALGORITHM ACCORDING TO THE STORED CURRENT ALGORITHM NUMBER |
| STORE ALGORITHM NUMBER TO BE VALID DURING TASK EXECUTION | DECODE RESPONSE DATA AND EXTRACT RESPONSE IDENTIFICATION NUMBER (I) |
| DECODE NEXT FIELD - THE TASK DATA | CHECK BIT I IN THE STORED VALID TASK DATA |
| STORE TASK DATA TO BE VALID DURING TASK EXECUTION | =1 / =0 |
| RET | CALL CORRECT RESPONSE ROUTINE GENERATE FEEDBACKS AND UPDATE SCORE / CALL WRONG RESPONSE ROUTINE GENERATE FEEDBACKS AND UPDATE SCORES |
| | RET / RET |

12

FIG. 10

READ CODE

CHECK FIRST BIT
FOR CODE CATEGORY

TASK = 1

0 = RESPONSE

ALGORITHM NUMBER
STORE TO BE VALID
DURING THE EXECUTION
OF TASK

DECODE FIRST FIELD
I

$I = $ ANY $M_i$

Y

N

$M_i = 0$

CALL WRONG
RESPONSE
ROUTINE

DECODE NEXT FIELD
$M_1 - M_2 - M_n$

RET

ALL
$M = 0$

N

Y

FEEDBACK
SCORING

CASE CORRECT
RESPONSE
ROUTINE

CALL CORRECT
RESPONSE
ROUTINE

RET

FEEDBACKS
AND SCORING
FOR CORRECT
RESPONSE

FEEDBACKS AND
SCORING FOR
END OF TASK

RET

RET

FIG. 11

START

READ DATA
FIRST BIT

"1"    "0"

FIRST PASS

Y    N

GENERATE
RANDOM I

DECODE
CHARACTERISTIC
DATA

RET

DECODE
IDENTIFICATION
# M

M = I

N    Y

CHECK
BIT I=1

Y    N

CALL CORRECT
ROUTINE

CALL WRONG
ROUTINE

CALL
WRONG
FEEDBACK

CALL
SUCCESS
FEEDBACK

UPDATE
SCORE

UPDATE
SCORE

UPDATE
SCORE

UPDATE
SCORE

RET    RET    RET    END